# EUROPEAN PATENT SPECIFICATION

(11) **EP 1 759 048 B1**
(45) Date of publication and mention of the grant of the patent: **07.03.2018**
(21) Application number: 05765975.7
(22) Date of filing: 24.06.2005
(51) Int. Cl.: D06F 37/30, H02K 1/30, H02K 1/32, H02K 9/06, H02K 15/03

(54) **MOTOR OF WASHING MACHINE**
WASCHMASCHINENMOTOR
MOTEUR POUR MACHINE A LAVER

(30) Priority: 24.06.2004 KR 20040047709; 24.06.2004 KR 20040047705; 24.06.2004 KR 20040047714; 24.06.2004 KR 20040047715; 24.06.2004 KR 20040047707; 24.06.2004 KR 20040047708; 24.06.2004 KR 20040047706
(43) Date of publication of application: 07.03.2007
(73) Proprietor: LG Electronics Inc., Seoul 150-721 (KR)
(72) Inventor: PARK, Yong Suck, Sungju-dong, Changwon-si, Gyeongsangnam-do 641-120 (KR)
(74) Representative: Vossius & Partner Patentanwälte Rechtsanwälte mbB
(86) International application number: PCT/KR2005/001968
(87) International publication number: WO 2006/001652

(56) References cited:
- EP-A2- 1 094 145
- EP-A2- 1 450 468
- WO-A2-2004/069019
- KR-Y1- 200 160 582
- US-A- 5 907 206
- US-A- 6 060 851

## Description

### [Technical Field]

The present invention relates to an outer rotor type induction motor for a washing machine, and more particularly, to an outer rotor type induction motor of an improved rotor structure for a washing machine.

### [Background Art]

In general, the washing machine washes laundry through steps of washing, rinsing, spinning, drying, and so on to remove dirt from clothes, and beddings (hereafter called as laundry) held in a washing tub by using actions of water and detergent.

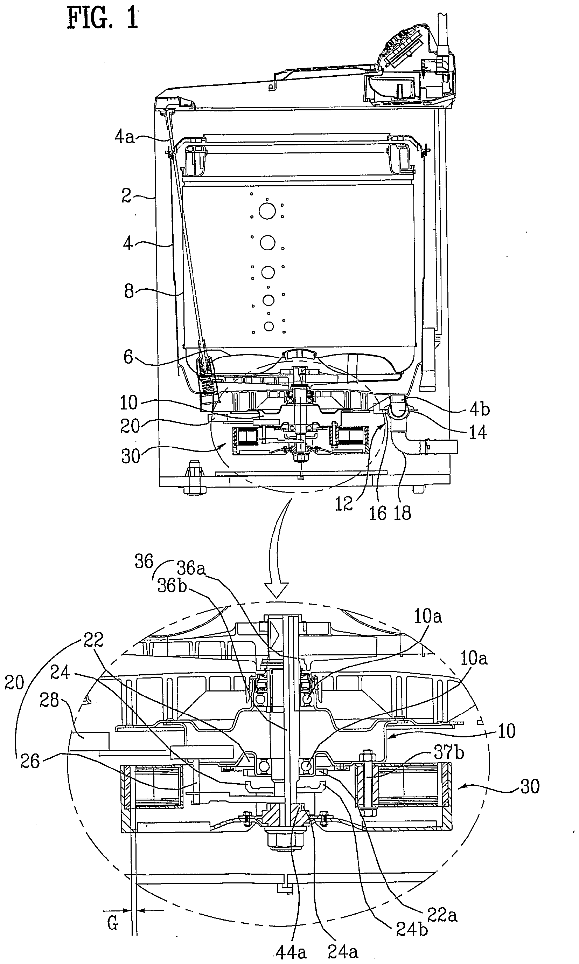

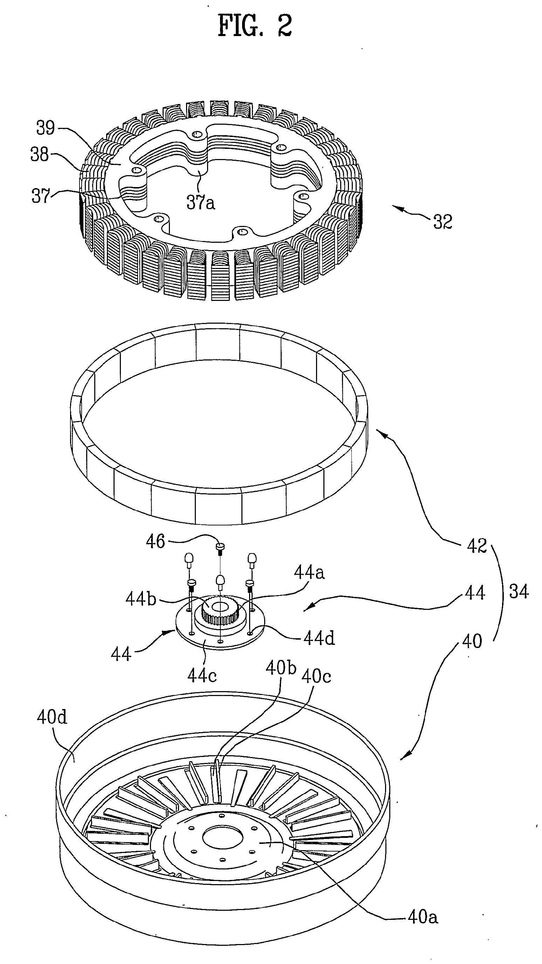

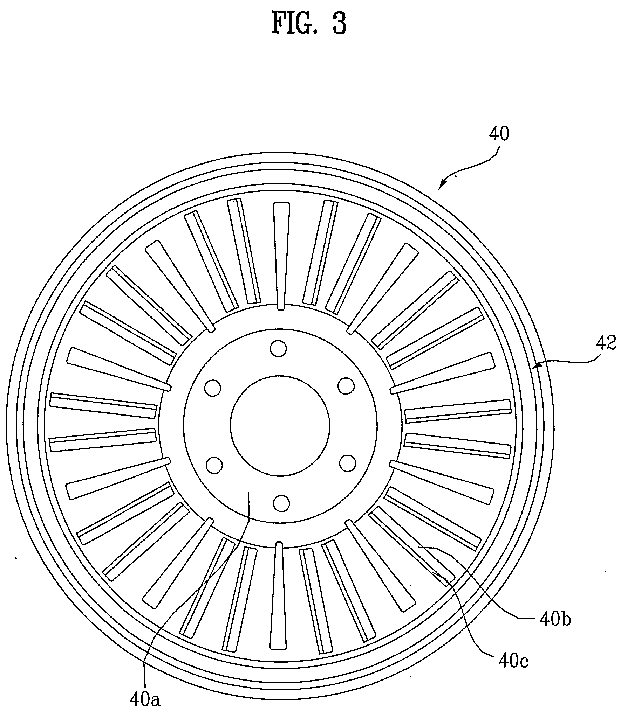

FIG. 1 illustrates a section of a washing machine having a related art motor applied thereto, FIG. 2 illustrates an exploded perspective view of a related art motor for a washing machine, and FIG. 3 illustrates a plan view of the rotor magnets and the rotor frame in FIG. 2.

Referring to FIG. 1, the related art washing machine is provided with a cabinet 2 forming an exterior thereof, an outer tub 4 suspended in the cabinet 2 with supporting members 4a, having a space for holding washing water, an inner tub 8 rotatably mounted in the outer tub 4, having a pulsator 6 mounted on a bottom, and water holes in an sidewall, a motor 30 under the outer tub 4 for providing driving force for rotating the pulsator 6 and the inner tub 8, a bearing housing 10 fixedly secured to a center of an underside of the outer tub 4, for rotatably supporting a rotating shaft 36 of the motor 30, and a clutch mechanism 20 between the bearing housing 10 and the motor 30 for connecting/disconnecting driving force transmitted to the pulsator 6 and the inner tub 8.

The outer tub 4 has a drain unit 12 at a lower portion for discharging washing water held in the outer tub 4 to an outside of the washing machine.

The drain unit 12 is provided with a drain valve 14 in communication with a drain hole 4b in the outer tub 4, a drain motor 16 at one side of a lower portion of the outer tub, and a drain hose 18 for guiding washing water drained through the drain valve 14 to an outside of the washing machine.

Under the bearing housing 10 fixedly secured to the center of underside of the outer tub 4, there is a stator fixed secured thereto. There is a rotating shaft 36 of the motor 30 passed through an upper surface and a lower surface of the bearing housing 10, rotatably supported with bearings 10a at an upper side, and a lower side of an inside of the bearing housing 10.

The motor 30 is of an Outer Rotor Type BLDC Motor (Brushless DC Motor), enabling to rotate the pulsator 6, or the inner tub 8 at various speeds as the BLDC motor 30 controls power supplied thereto to control a speed of the motor 30.

The rotating shaft 36 of the motor 30 is provided with a hollow spinning shaft 36a having an upper end connected to the inner tub 8, and a washing shaft 36b rotatably mounted inside of the hollow spinning shaft 36a, having a lower end connected to the motor 30, and an upper end connected to the pulsator 6.

In the meantime, the clutch mechanism 20 is provided with a coupling stopper 22 fixedly secured to the underside of the bearing housing 10, a clutch coupling 24 coupled to a lower end of the spinning shaft 36a with a spline for enabling axial direction sliding, a clutch lever 26 having one side connected to the clutch coupling 24, for making the clutch coupling 24 to move in an axial direction to engage with the motor 30 or the coupling stopper 22, and a clutch motor 28 at the other side of the clutch lever 26 for operating the clutch lever 26.

The clutch coupling 24 has a first clutch gear 24a on an underside surface for engagement with a second clutch gear 44a on a rotor bushing 44 (see FIG. 2) of the motor 30, and a first locking gear 24b on an upper surface for engagement with a second locking gear 22a on the coupling stopper 22.

Accordingly, if the clutch lever 26 makes the clutch coupling 24 to move down, the first clutch gear 24a and the second clutch gear 44a are engaged, to transmit power from the motor 30 to the spinning shaft 36a, and if the clutch lever 26 makes the clutch coupling 24 to move up, the first locking gear 24b and the second locking gear 22a are engaged, to make power transmission from the motor 30 to the spinning shaft 36a impossible.

In above washing machine, if a DC power is applied to the motor 30, and the clutch mechanism 20 makes the clutch coupling 24 to engage with the coupling stopper 22, the power is transmitted only from the motor 30 to the pulsator 6 through the washing shaft 36b, and by controlling a speed of the motor 30, washing and rinsing of the laundry is performed by the pulsator 6.

If the DC power is applied to the motor 30, and the clutch mechanism 20 makes the clutch coupling 24 to engage with the motor 30, the power is transmitted from the motor 30 both to the pulsator 6 and the inner tub 8 at the same time through the washing shaft 36b and the spinning shaft 36a, and by driving the motor 30 at a high speed, both the pulsator 6 and the inner tub 8 run at a high speed, to extract water from the laundry.

In the meantime, referring to FIGS. 2 and 3, the related art motor is provided with the stator 32 fixedly secured to the underside of the bearing housing 10, and a rotor 34 rotatably mounted to surround an outer side of the stator 32 so as to be rotatable by electro-magnetic force acting between the stator 32 and the rotor 34.

The stator 32 is provided with an annular core 37 having a stack of a plurality of steel pieces, and a coil 38 wound on the core 37 and connected to an external power source.

The core 37 has insulators 39 on an upper side and a lower side, and a plurality of fastening portions 37a formed along, and projected inward from, an inside circumference. Each of the fasting portions 37a has a fastening hole, for fastening to the underside of the bearing housing with a fastening bolt 37b.

The rotor 34 is provided with a rotor frame 40 to surround an outside circumference and an underside of the stator 32, a rotor magnet 42 mounted on an inside circumference of the rotor frame 40 so as to be rotatable by electro-magnetic force acting between the stator 32 and the rotor magnet 42, and a rotor bushing 44 at a center of a lower surface of the rotor frame 40, for fastening a lower end of the rotating shaft 36 thereto.

The rotor frame 40 of a cylindrical shape with an opened top is provided with a rotor magnet securing portion 40d on an inside surface for seating, and securing the rotor magnet 42, and a bushing securing portion 40a at a center of the lower surface for pass of the rotating shaft 36, and securing the rotor bushing 44 thereto.

On an outer side of the bushing securing portion 40a of the lower surface of the rotor frame 40, there are a plurality of lower air holes 40b and lower blades 40c arranged in a circumferential direction spaced from each other.

The lower blade 40c is on one side of the lower air hole 40b, and both the lower blade 40c and the lower air hole 40b are extended in a radial direction. Accordingly, when the rotor frame 40 rotates, air is blown into an inside of the motor 30 by the lower air holes 40b to cool the rotor 34 and the stator 32.

The rotor magnet 42 is a plurality of permanent magnets bonded to the rotor magnet securing portion 40d of the rotor frame 40 with adhesive opposite to the outside circumferential surface of the stator 32, to form a gap G (see FIG. 1) between the rotor magnet 42 and the stator 32.

The rotor bushing 44 is provided with a bushing portion 44b for placing a lower end of the washing shaft 36b of the rotating shaft 36 therein, having the second clutch gear 44a on an outside circumferential surface, and a flange portion 44c around the bushing portion 44b for securing to the bushing securing portion 40a of the rotor frame 40.

The bushing portion 44b is formed of a metal.

The flange portion 44c is a plastic injection molding for electric insulation between the bushing portion 44b and the rotor frame 40, and has fastening holes 44d in correspondence to the fastening holes in the bushing securing portion 40a, for fastening with fastening members 46.

However, because the rotor magnet 42 is bonded to the inside circumferential surface of the rotor frame 40 with adhesive (not shown), the related art motor for a washing machine has a problem in that the rotor magnet 42 falls off the rotor frame 40 to the opened top by the rotating force of the motor 30 when adhesive force of the adhesive 'B' becomes low.

That is, the adhesive is liable to be involved in composition change as time passes by, or affected by heat from the motor 30, leading to have poor adhesive force. Therefore, if the adhesive force of the adhesive becomes poor, since the rotor magnet 42 falls off by the rotating force of the rotor frame 40 unexpectedly, reliability of the motor 30 drops, and a lifetime of the motor 30 also becomes shorter.

Moreover, application of a special adhesive having a good heat resistance, and a durability raises cost of the motor 30.

Next, the related art motor for a washing machine has a problem in that the rotor frame 40 distorts, or deforms into an oval shape, due to centrifugal force coming from high speed rotation of the rotor frame 40.

On the other hand, even though the deformation by the centrifugal force can be prevented if the rotor frame 40 is fabricated to have an adequate thickness to reinforce a strength of the rotor frame 40 for resolving above problem, a material cost of the rotor frame 40 increases, to raise a cost of the motor 30, and a weight of the rotor frame 40 increases, to drop an efficiency of the motor 30.

Next, because the related art motor for a washing machine has a structure in which the gap 'G' between the stator 32 and the rotor magnet 42 is invisible from an outside of the motor, it is liable that the rotor 34 is assembled in a state the gap 'G' is not even, and even if the gap 'G' becomes uneven due to use of the motor 30 for a long time, verification, and adjustment of the state has been difficult.

The uneven gap 'G' causes to drop efficiency of the motor 30, and damage to the motor 30 if the stator 32 and rotor magnet 42 collide.

Particularly, though maintenance of the gap 'G' of the motor 30 is essential, the maintenance of the gap 'G' has been very difficult and cumbersome, since verification and adjustment of the gap 'G' is only possible in a state the rotor frame 40 is disassembled.

Moreover, in the related art motor for a washing machine, the inside temperature rise of the motor 30 due to heat loss of the stator 32 and rotor 34 following a long time running of the motor 30 impairs a performance of the motor 30.

In order to resolve such a problem, though the lower air holes 40b and the lower blades 40c are formed on the rotor frame 40 of the motor 30 for introducing external air thereto to cool the motor 30, the lower air holes 40b and the lower blades 40c can not provide an adequate air flow rate enough to prevent the temperature rise of the motor 30, particularly, in spinning of the motor 30 for extraction of water, overheating of the motor 30 drops the efficiency more.

Particularly, since the lower air holes 40b and the lower blades 40c blow air only toward a lower side of the motor 30, cooling of an upper side of the motor 30 is very low.

That is, when the motor 30 is driven, the plurality of lower air holes 40b draw external air through a portion near to the center of the rotor frame 40. Then, the air rises through, and cools, a lower portion of the stator 32, and the air cooled the lower portion of the stator 32 exits to an outside of the rotor frame 40 through a portion near to a side surface of the rotor frame 40 of the lower air holes 40b, again.

Accordingly, air blown by the lower air holes 40b and the lower blades 40c form a flow path along a bottom of the rotor frame 40, but not along an upper side of the motor 30, cooling of the upper side of the motor 30 is little.

In the meantime, outer rotor type induction motors also have above problems.

US 5 907 206 A discloses a rotor for an electric motor including a plurality of annularly disposed rotor magnets, a frame made of steel plate and having an annular wall disposed outside the annularly disposed rotor magnets so as to be located at a side opposed to the stator with respect to the rotor magnets, the annular wall having an open end, a ring member made of a magnetic material and disposed along the annular wall of the frame at an inner or outer circumferential side of the annular wall, and a resin molded member comprising a resin for integrating the rotor magnets, the frame and the ring member together.

US 6 060 851 A discloses a full-automatic washing machine including a brushless motor for direct driving at least one of a rotatable tub and an agitator. EP 1 094 145 A2 describes a structure of a driving unit in a drum type washing machine.

KR 200 160 582 Y1 is directed to a motor housing.

### [Disclosure]

### [Technical Problem]

An object of the present invention is to provide a motor for a washing machine, in which fall off of a rotor core is prevented effectively, strength of the rotor frame is reinforced, rigidity of the rotor frame is enhanced, to prevent deformation of the rotor frame, and a thickness and weight of the rotor frame is reduced.

Another object of the present invention is to provide a motor for a washing machine, which enables easy verification and adjustment of a gap, prevents the gap from becoming uneven, thereby preventing drop of efficiency of the motor.

Another object of the present invention is to provide a motor for a washing machine, in which air flow rate into the motor is increased, to improve cooling performance of the motor, and enhance a lifetime and efficiency of the motor.

Further object of the present invention is to provide a motor for a washing machine, in which an air blowing structure is formed at the rotor, so that air can be blown toward the upper side of the motor when the motor is driven, for improving a cooling performance of the motor, and increasing lifetime and efficiency of the motor.

### [Technical Solution]

For achieving the objects of the present invention, a motor for a washing machine as defined by claim 1 is provided. The dependent claims describe embodiments of the invention.

### [Advantageous Effects]

The seating portion at a side of the rotor frame for placing the rotor core therein, the plurality of lower projections under the seating portion for supporting a lower end of the rotor core, and the plurality of the upper projections over the seating portion for holding upward movement of an upper end of the rotor core prevent the rotor core from moving in up/down directions, and falling off upward during driving the motor.

The prevention of the rotor core from moving in up/down directions, and falling off upward improves reliability of the motor and extends a lifetime of the motor.

The vertical position of the lower projections in the seating portion of the rotor frame variable with a height of the rotor core, enabling to mounted varied sizes of rotor core, permits to use the rotor core in common.

The plurality of notches at the corner connecting the lower surface and the side surface of the rotor frame reinforce strength of the rotor frame to enhance rigidity of the rotor frame, to prevent deformation of the rotor frame during the motor is driven.

The reinforcement of the rotor frame with the plurality of notches, enabling to construct the rotor frame with a thinner material, permits to reduce a material cost of the rotor frame, to reduce unit cost of the motor, and weight of the rotor frame, thereby improving efficiency of the motor.

The notches formed by punching a portion of the corner of the rotor frame from an outside to an inside permits to form in the rotor frame conveniently by changing a mold structure of the rotor frame, slightly.

The plurality of beads on the lower surface of the rotor frame in a radial pattern, with one end thereof extended to an inside of the bushing securing portion, reinforce strength of the rotor frame, to enhance rigidity of the rotor frame, thereby permitting deformation of the rotor frame when the motor is driven.

The reinforcement of strength of the rotor frame with the plurality of beads, permitting to fabricate the rotor frame thinner, reduces a material cost of the rotor frame, to reduce unit cost of the motor, as well as weight of the rotor frame, permitting to improve an efficiency of the motor.

The plurality of beads between the plurality of fastening holes, with one ends extended along a stepped slope surface of the busing securing portion to position in the same circumference with the fastening holes of the bushing securing portion, permits to prevent the rotor frame from deforming even if stress is concentrated on the stepped slope surface of the bushing securing portion or the fastening holes.

The plurality of gap verifying holes in a lower surface of the rotor frame in a circumferential direction to verify a gap between the stator and the rotor core permits to verify the gap between the stator and the rotor core conveniently, and smooth adjustment of non-uniform gap.

The convenient verification and adjustment of the gap permits to form the gap uniform at an optimal design value in assembly and maintenance of the motor, thereby preventing motor efficiency from dropping due to non-uniform gap.

The plurality of gap verifying holes in the lower surface of the rotor frame enables smooth discharge of water introduced in an inside of the rotor frame to an outside of the motor, and to improve a cooling performance of the motor as external air is blown into an inside of the motor through the gap verifying holes following rotation of the rotor frame.

The plurality of the lower air holes and the lower blades in the lower surface of the rotor frame extended tilted by a predetermined angle with respect to a radial direction of the rotor frame increase an air flow rate blown by the lower air holes and the lower blades when the motor is driven compared to a case when the lower air holes and the lower blades are extended in the radial direction of the rotor frame, thereby improving the cooling performance of the motor, and increasing lifetime and efficiency of the motor.

The lower air holes and the lower blades extended tilted in a direction opposite to a rotation direction of the rotor frame in spinning of the washing machine enable to maximize an air flow rate by the lower air holes and the lower blades at the time of spinning when a heat loss of the motor becomes the maximum.

Moreover, the lower air holes and the lower blades extended tilted by a 30° with respect to the radial direction of the rotor frame makes the air flow rates by the lower air holes and the lower blades at the time of both regular and reverse direction rotations of the motor maximum to maximize the cooling performance of the motor.

The plurality of blades 158 projected upward from a top of the rotor core for blowing external air to an upper portion of the motor permits to cool the upper portion of the motor, to improve the cooling performance of the motor, and increase a lifetime and efficiency of the motor.

The plurality of blades 158 extended in a radial direction on the upper end ring of the rotor core permits to secure the same cooling performance of the motor regardless of the rotation direction of the motor.

The plurality of blades 158 on the upper end ring of the rotor core extended in a direction opposite to a rotation direction of the motor in spinning make the air flow rate by the blades 158 to be maximum in spinning of the motor, to make the cooling performance of the motor also maximum.

The blades 158 formed as one body with the upper end ring of the rotor core permits to fabricate the blades 158 conveniently by changing only a mold structure of the upper end ring, partially.

The plurality of blades 158 at a top portion of the rotor frame for blowing external air to an upper portion of the motor permits to cool the upper portion of the motor, to improve the cooling performance of the motor, and increase a lifetime and efficiency of the motor.

The plurality of blades 158 at a top portion of the rotor frame extended in a radial direction improves the cooling performance of the motor regardless of the rotation direction of the motor.

The plurality of blades 158 on a top portion of the rotor frame extended in a direction tilted by a predetermined angle with respect to a radial direction of the rotor frame opposite to the rotation direction of the motor for making the air flow rate to be maximum in spinning of the washing machine permit the cooling performance of the motor maximum at the time of spinning when the heat loss of the motor becomes the maximum.

The blades 158, having a structure in which an upper bent portion of the rotor frame is bent upward after the upper bent portion is cut partially, permits to fabricate the blades 158 conveniently by changing only a mold structure of the rotor frame partially, thereby preventing additional increase of material cost caused by the blades 158.

### [Description of Drawings]

FIG. 1 illustrates a side section of a washing machine having a related art motor applied thereto;
FIG. 2 illustrates an exploded perspective view of a related art motor for a washing machine in FIG. 1;
FIG. 3 illustrates a plan view of the rotor magnet and the rotor frame in FIG. 2;
FIG. 4 illustrates a side section of a washing machine having a motor in accordance with a preferred embodiment of the present invention applied thereto;
FIG. 5 illustrates a perspective view showing key parts of FIG. 4;
FIG. 6 illustrates a section showing key parts of FIG. 4;
FIG. 7 illustrates a section across an A-A line in FIG. 5;
FIG. 8 illustrates an exploded perspective view of a motor for a washing machine in accordance with a first preferred embodiment of the present invention;
FIGS. 9 to 11 illustrate sections showing the steps of a process for mounting a rotor core of a motor in accordance with a first preferred embodiment of the present invention in succession;
FIG. 12 illustrates a plan view of the rotor core and the rotor frame in FIG. 8;
FIG. 13 illustrates a back view of FIG. 12;
FIGS. 14 to 16 illustrate reference diagrams each showing a flow pattern and a flow speed of air for a type of lower air holes and lower blades when the motor is running;
FIG. 17 illustrates a reference diagram showing a flow pattern and a flow speed of air formed by blades at a top of a rotor core when the motor is running;

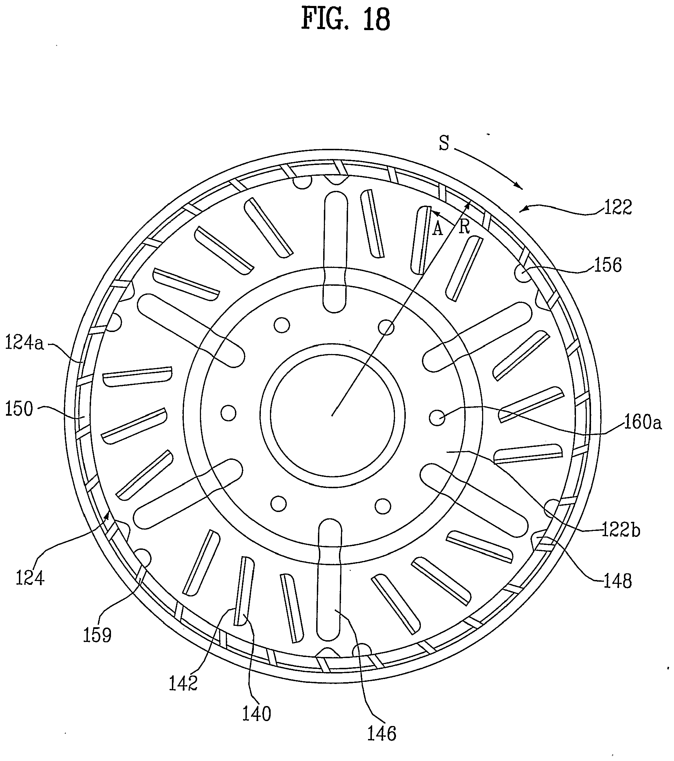

FIG. 18 illustrates a plan view of a rotor core of a motor in accordance with another preferred embodiment of the present invention, showing blades at a top of the rotor core each tilted a predetermined angle with respect to a radial direction;

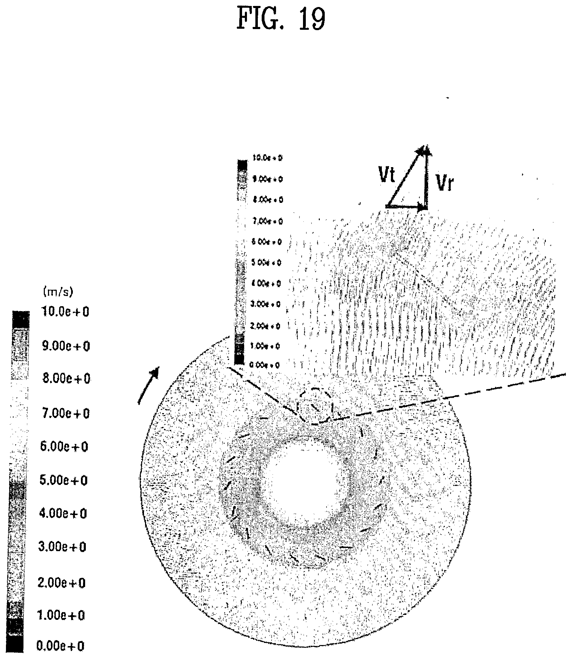

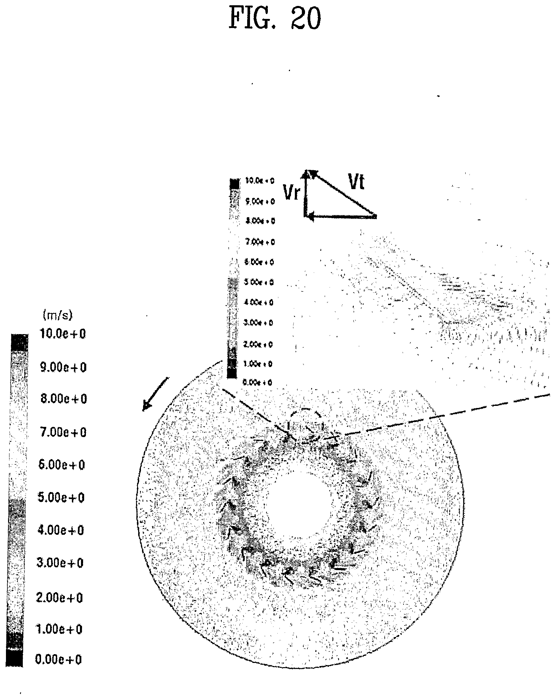

FIGS. 19 and 20 illustrate reference diagrams each showing a flow pattern and a flow speed of air formed by blades at a top of a rotor core when the motor is running when the blades are formed in a pattern suggested in FIG. 18;

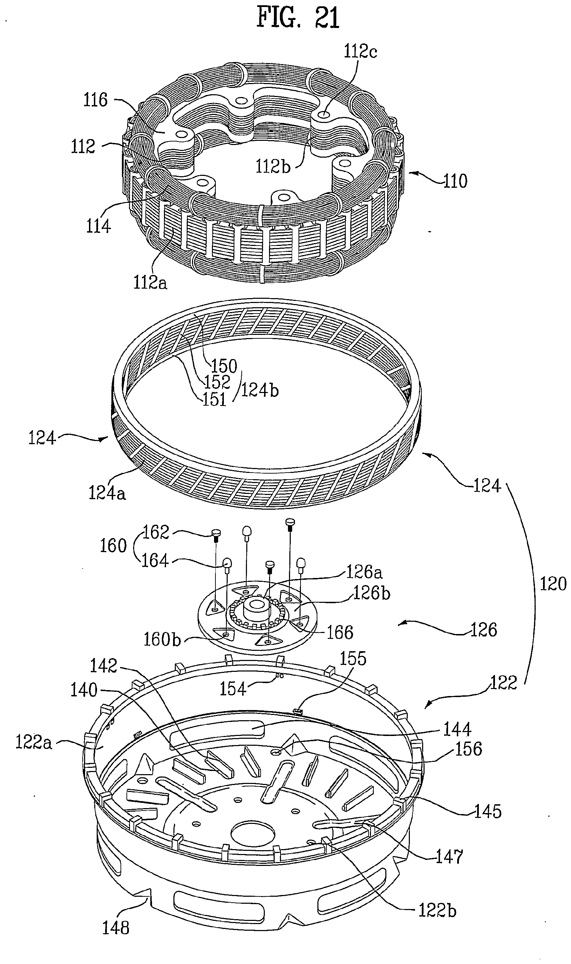

FIG. 21 illustrates an exploded perspective view of a motor in accordance with another preferred embodiment of the present invention;

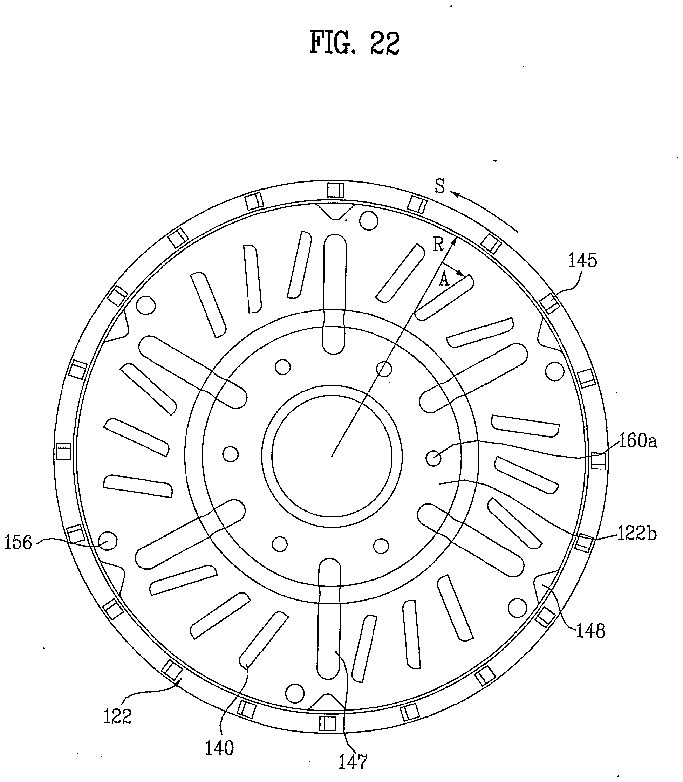

FIG. 22 illustrates a plan view of a motor frame in FIG. 21; and

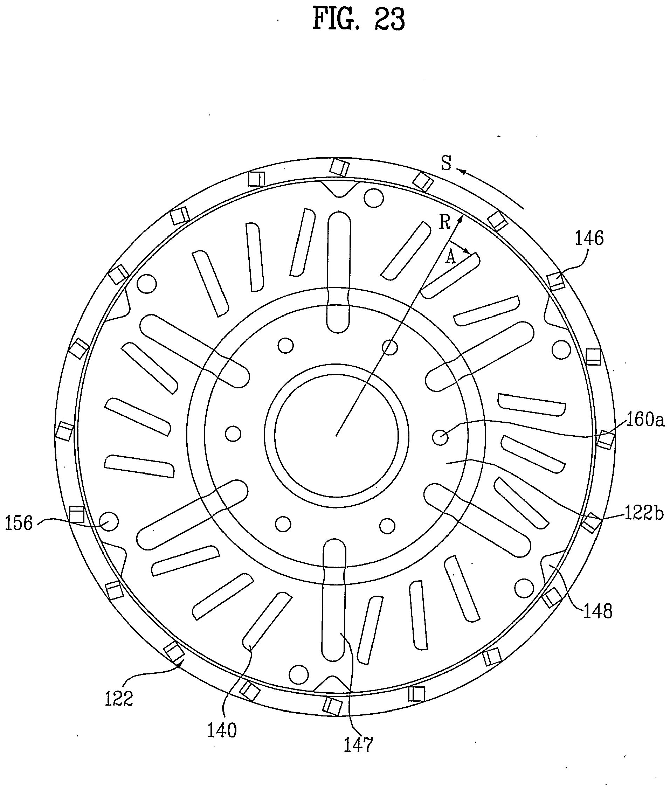

FIG. 23 illustrates a plan view of a variation of a motor frame in FIG. 22.

### [Best Mode]

Embodiments of the present invention will be described with reference to the attached drawings.

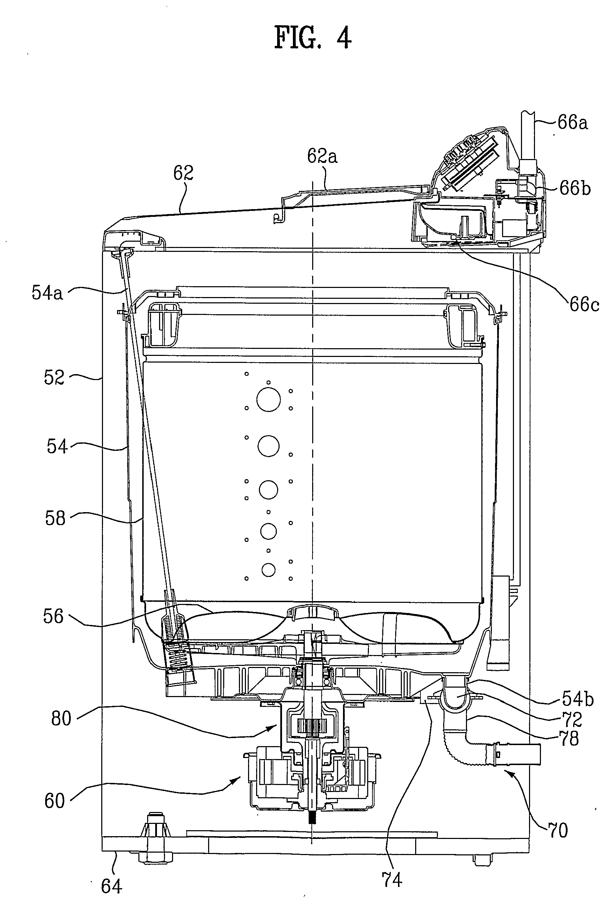

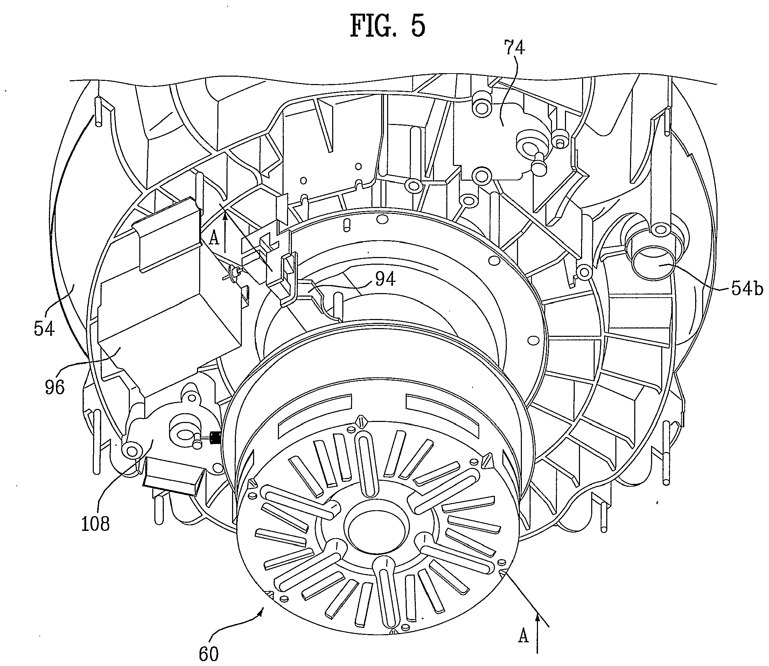

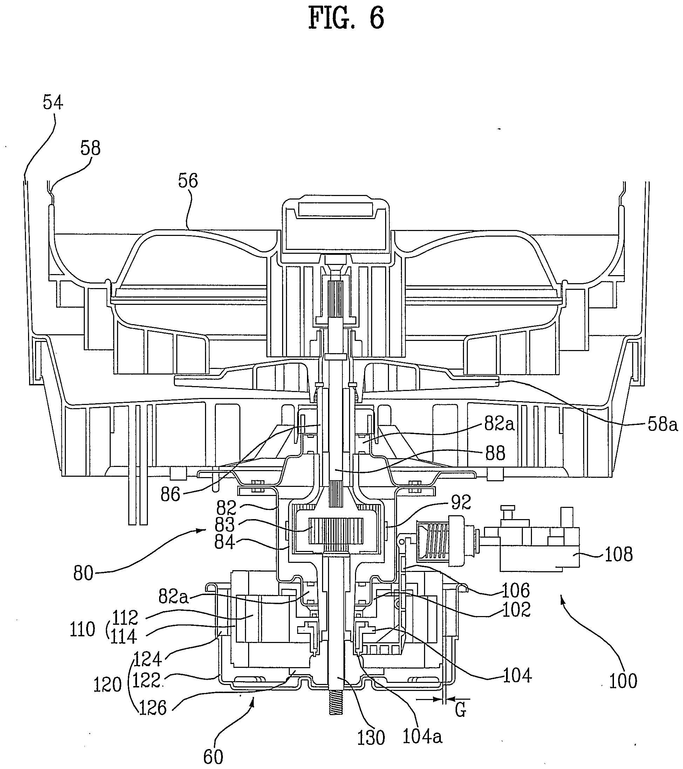

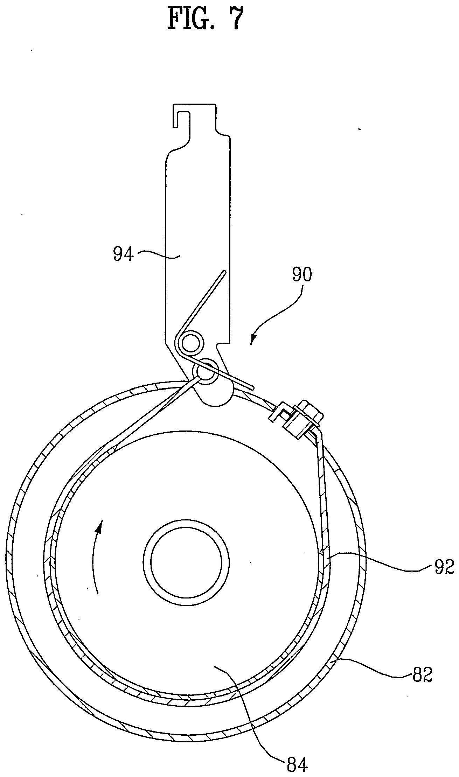

FIG. 4 illustrates a side section of a washing machine having a motor in accordance with a preferred embodiment of the present invention applied thereto, FIGS. 5 and 6 illustrate a perspective view and a section showing key parts of FIG. 4, respectively, and FIG. 7 illustrates a section across an A-A line in FIG. 5.

Referring to FIGS. 4 to 7, the washing machine includes a cabinet 52 forming an exterior thereof, an outer tub 54 suspended in the cabinet 52 with supporting members 54a, having a space therein for holding washing water, an inner tub 58 rotatably mounted in the outer tub 54, having a pulsator 56 mounted on a bottom, and water holes in an sidewall, a motor 60 under the outer tub 54 for providing driving force for rotating the pulsator 56 and the inner tub 58, and a power transmission unit 80 between the motor 60 and the outer tub 54 for connecting/disconnecting driving force transmitted to the pulsator 56 and the inner tub 58 selectively.

On the top of the cabinet 52, there is a top cover 62 having a laundry opening for introducing/taking out laundry to/from the washing machine, and under the cabinet 52, there is a base 64 having supporting legs provided thereto for supporting the washing machine. On the top cover 62, there is a lid 62a rotatably mounted for opening/closing the laundry opening, and at one side of the top cover 62, there is a water supply unit 66 for supplying water into the washing machine in supplying water.

The water supply unit 66 includes a water supply hose 66a for supplying washing water from an outside of the washing machine, and a water supply valve 66b for cutting off washing water supplied to the water supply hose 66a, and, in a water supply flow passage, there is a detergent box 66c such that detergent is washed away toward the outer tub 54 by water passed through the water supply valve 66b.

The outer tub 54 has a drain unit 70 at a lower portion for discharging washing water held in the outer tub 54 to an outside of the washing machine.

The drain unit 70 includes a drain valve 72 having one end in communication with a drain hole 54b in the outer tub 54, a drain motor 74 on an underside of the outer tub 54 for controlling opening/closing of the drain valve 72, and a drain hose 78 in communication with the other end of the drain valve 72 for guiding washing water drained through the drain valve 72 to an outside of the washing machine.

The drain hole 54b is formed in a bottom of the outer tub 54 so as to be in communication with an inside of the outer tub 54, and the drain motor 74 is coupled to the drain valve 72 with separate connecting members.

The motor 60 is an Induction Motor of an Outer Rotor Type to which an AC power is supplied, and has a speed reduced by the power transmission unit 80, appropriately.

In the meantime, the power transmission unit 80 includes a housing 82 mounted to a center of an underside of the outer tub 54, having an underside with a stator of the motor 60 fixedly secured thereto, a drum 84 rotatably mounted in the housing 82, having a planetary gear 83 therein for reducing a speed of the motor 60, a hollow spin shaft 86 having a lower end press fit in the drum 84, and an upper end connected to the inner tub 58, a washing shaft 88 rotatably mounted in the hollow spin shaft 86, having a lower end engaged with the planetary gear 83 and an upper end connected to the pulsator 56, a brake mechanism 90 mounted to the housing 82 for braking the power transmission unit 80, and a clutch mechanism 100 under the drum 84 for connecting/disconnecting power transmission between the motor 60 and the drum 84.

On an upper side and a lower side of the housing, there are bearings 82a for rotatably supporting the drum 84 and the spin shaft 86 respectively, and at a lower portion of an inside of the drum 84, there is a rotating shaft 130 of the motor 60 rotatably mounted thereon.

The rotating shaft 130 has an upper end engaged with the planetary gear 83 in the drum 84, and between the drum 84 and the rotating shaft 130, and between the spin shaft 86 and the washing shaft 88, there are oiless bearings, too.

The spin shaft 86 has an upper end connected to an inner tub hub 58a fixedly secured to a bottom of the inner tub 58, and a lower end press fit in an upper portion of the drum 84. The spin shaft 86 mounted thus is to transmit power of the motor 60 from the drum 84 transmitted thereto by the clutch mechanism 100 to the inner tub 58.

Referring to FIG. 6, the brake mechanism 90 includes a brake band 92 having one end secured to the housing 82, and arranged to surround an outside circumference of the drum 84, a brake lever 94 having the other end of the brake band 92 connected thereto with a hinge, and rotatably mounted to the housing 82, and a brake motor 96 (see FIG. 4) connected to the brake lever 94 so that the brake band 92 tightens an outside circumference of the drum 84.

The brake motor 96 (see FIG. 4) is mounted on an underside of the outer tub 54, for applying a force higher than a predetermined value to the brake lever 94 to forcibly stop the drum 84 by the brake band 92. Accordingly, it is required that the brake motor 96 has an adequate capacity so that the brake band 92 can secure an adequate braking power for braking the drum 84.

The clutch mechanism 100 includes a coupling stopper 102 fixedly secured to an underside of the housing 82, a clutch coupling 104 connected to a lower end of the drum 84 with a spline to be movable up/down, a clutch lever 106 rotatably mounted on the clutch stopper 102, having one end connected to the clutch coupling 104, and a clutch motor 108 connected to the other end of the clutch lever 106, for connecting/disconnecting power transmission between the clutch coupling 104 and the motor 60.

The clutch coupling 104 includes a first clutch gear 104a projected form a lower surface for engagement with a second clutch gear 166 on the motor 60, and connected to the drum 84 of the clutch mechanism 100 with a spline to be movable up/down.

The clutch lever 106 has one end connected to the clutch coupling 104, the other end connected to the clutch motor 108, and a middle of the one end and the other end rotatably connected to the coupling stopper 102 with a hinge.

The clutch motor 108 is mounted on an underside of the outer tub 54 for moving the clutch lever 106 such that the clutch coupling 104 moves up/down along a lower portion of the drum 84.

That is, when the clutch lever 106 is rotated by the clutch motor 108, the clutch coupling 104 is slid up/down along the lower portion of the drum 84 by the clutch lever so that the clutch coupling 104 is engaged with the motor 60 or the coupling stopper 102.

The operation of the washing machine of the present invention will be described.

Upon application of power to the washing machine to drive the motor 60, power is transmitted form the motor 60 to the power transmission unit 80 through the rotating shaft 130, and, as the pulsator 56 or the inner tub 58 is driven selectively by the power transmission unit 80, washing, rinsing, and spinning cycles are progressed.

In detail, in a case it is intended to operate only the pulsator 56 to perform the washing, and the rinsing cycles, the clutch coupling 104 of the power transmission unit 80 is moved up by the clutch motor 108 and the clutch lever 106 to decouple the motor 60 and the drum 84.

That is, if the clutch motor 108 moves the clutch lever 106 such that the clutch coupling 104 moves up along the lower portion of the drum 84, the first clutch gear 104a of the clutch coupling 104 is disengaged from the second clutch gear 166 of the motor 60, the clutch mechanism 100 can not transmit power from the motor 60 to the clutch coupling 104.

Accordingly, power is transmitted from the motor 60 only to the planetary gear 83 in the drum 84 through the rotating shaft 130, and, therefrom to the washing shaft 88 after a speed thereof is reduced by the planetary gear 83 appropriately, to perform washing or rinsing as the pulsator 56 is rotated by the washing shaft 88.

During washing or rinsing, the drain unit 70 discharges washing water used for washing or rinsing to an outside of the washing machine, and the water supply unit 66 supplied water to the washing machine.

That is, as the water supply valve 66b of the water supply unit 66 is opened/closed, water is supplied to the outer tub 54 of the washing machine through the water supply hose 66a, and as the drain valve 72 is opened/closed by the drain motor 74 of the drain unit 70, the washing water is drained from the outer tub 54 to an outside of the washing machine through the drain valve 72 and the drain hose 78.

Opposite to this, in a case both the pulsator 56 and the inner tub 58 are driven at the same time, to perform spinning to extract water from the laundry, the clutch coupling 104 is moved down by the motor 108 and the clutch lever 106, the power transmission unit 80 couples the motor 60 and the drum 84.

That is, if the clutch motor 108 moves the clutch lever 106 such that the clutch coupling 104 moves down along the lower portion of the drum 84, the first clutch gear 104a of the clutch coupling 104 is engaged with the second clutch gear 166, to enable power transmission from the motor 60 to the clutch coupling 104.

According to this, power is transmitted from the motor 60 to the planetary gear 83 in the drum 84 through the rotating shaft 130, and, at the same time with, to the drum 84 through the clutch coupling 104, the drum 84 and the rotating shaft 130 rotate at the same speed.

In this instance, since the drum 84 and the rotating shaft 130 rotate at the same speed together, a speed reducing function of the planetary gear 83 in the drum 84 is effective no more, such that the drum 84 and the rotating shaft 130 rotate at a high speed.

If the power is transmitted from the motor 60 to the drum 84 and the rotating shaft 130 at the same time thus, the rotating shaft 130 and the planetary gear 83 rotate the washing shaft 88, and the drum 84 rotates the spin shaft 86, such that the pulsator 56 and the inner tub 58 are rotated by the washing shaft 88 and the spin shaft 86.

In the meantime, if the lid 62a is opened by the user in the middle of spinning, the power transmission unit 80 brakes rotation of the drum 84 by means of the brake mechanism 90, to prevent accident from occurring by negligence of safety caused by spinning pulsator 56 and the inner tub 58.

That is, in the spinning when the pulsator 56 and the inner tub 58 rotate at a high speed, if the lid 62a is opened, the brake lever 94 is pulled by the brake motor 96 of the brake mechanism 90, to tighten the brake band 92 on the outside circumference of the drum 84, to stop rotation of the drum 84 by friction between the drum 84 and the brake band 92.

Thus, when rotation of the drum 84 is braked, rotation of the spin shaft 86 and the washing shaft 88 stop, to stop rotation of the inner tub 58 and the pulsator 56, accordingly.

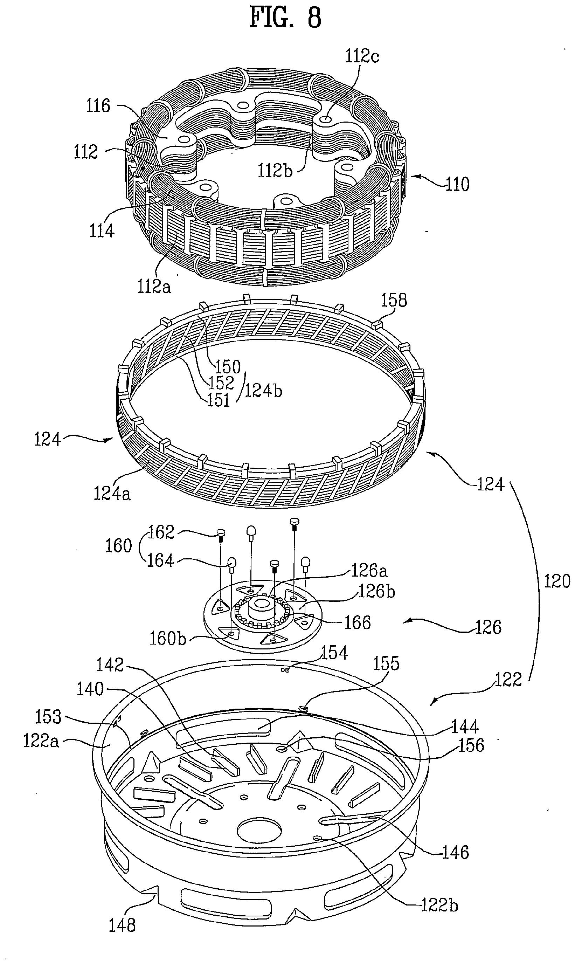

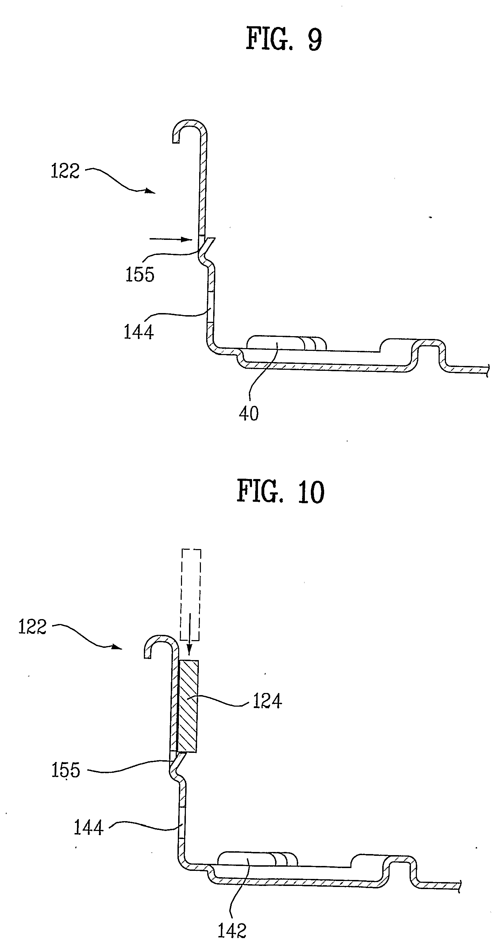

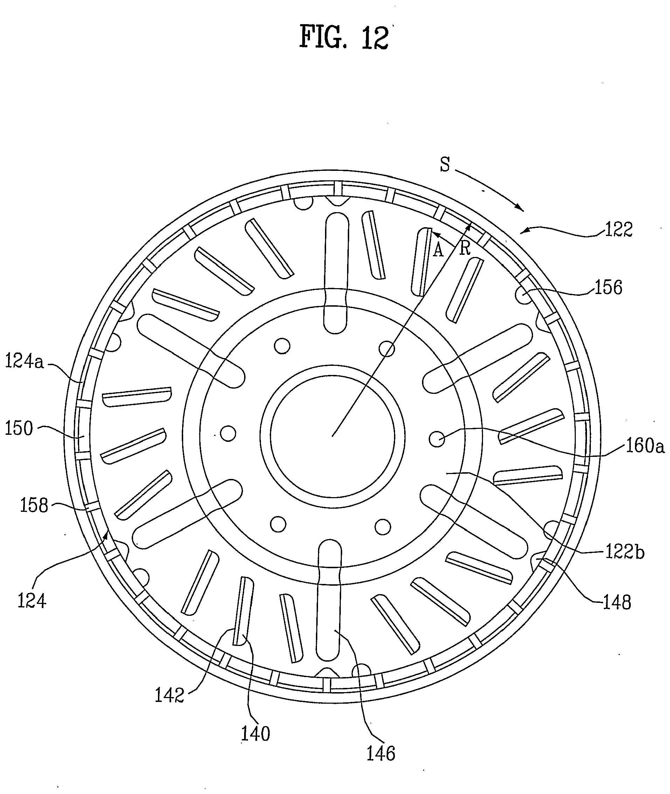

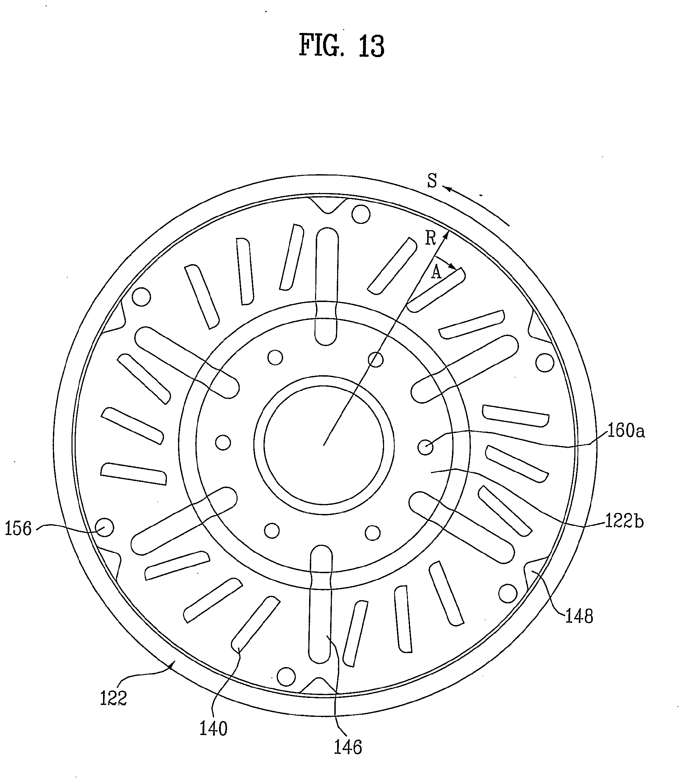

FIG. 8 illustrates an exploded perspective view of a motor for a washing machine in accordance with a first preferred embodiment of the present invention, FIGS. 9 to 11 illustrate sections showing the steps of a process for mounting a rotor core of a motor in accordance with a first preferred embodiment of the present invention in succession, FIG. 12 illustrates a plan view of the rotor core and the rotor frame in FIG. 8, and FIG. 13 illustrates a back view of FIG. 12.

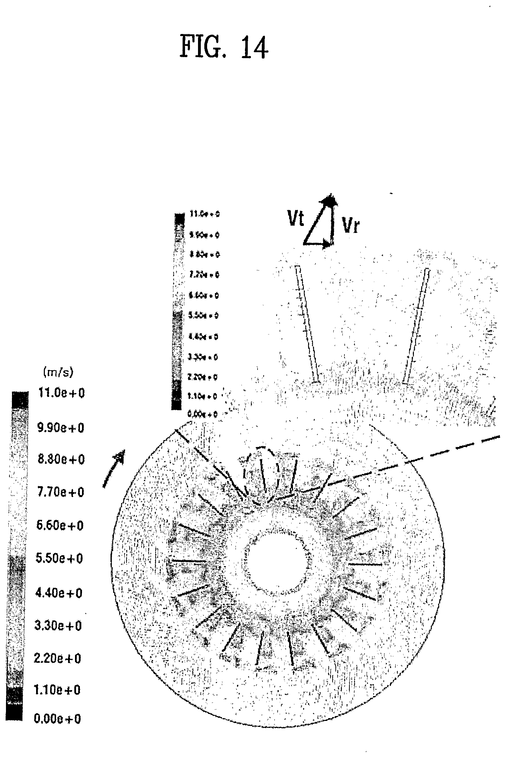

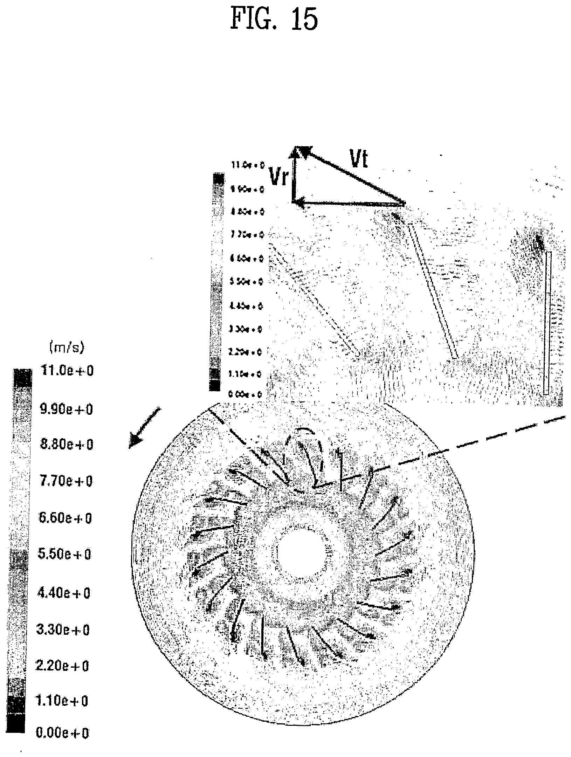

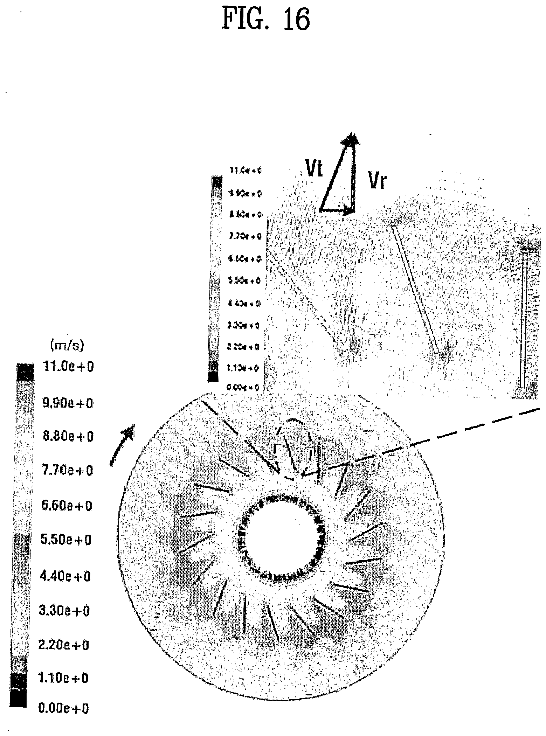

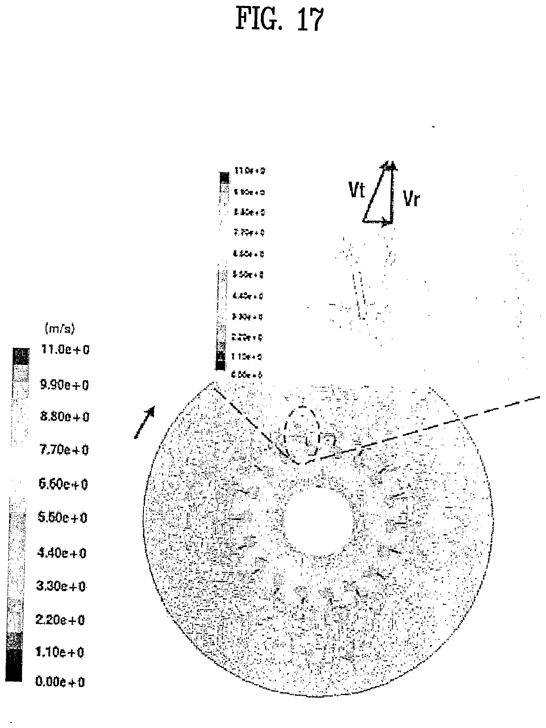

FIGS. 14 to 16 illustrate reference diagrams each showing a flow pattern and a flow speed of air for a type of lower air holes and lower blades when the motor is running, and FIG. 17 illustrates a reference diagram showing a flow pattern and a flow speed of air formed by blades at a top of a rotor core when the motor is running.

Referring to FIGS. 6 to 17, the motor for a washing machine in accordance with a first preferred embodiment of the present invention includes a stator 110 fixedly secured to an underside of housing 82 of a power transmission unit 80, and a rotor 120 mounted to surround an outside of the stator 110, for being rotatable by electromagnetic force generated with respect to the stator 110.

Inside of a drum 84 of the power transmission unit 80, there is a rotating shaft 130 rotatably mounted thereon, having a lower end coupled to the rotor 120, and an upper end engaged with a planetary gear 83 of the power transmission unit 80.

The stator 110 includes an annular core 112 having a stack of a plurality of steel pieces, a coil 114 wound on the core 112 and connected to an AC power source, and insulators 116 on an upper side and a lower side of the core 112 for performing an insulating function.

There are a plurality of Ts 112a each projected outwardly in a radial direction from the core 112 for winding the coil 114 thereon, and a plurality of fastening portions 112b each projected inwardly from an inside circumference of the core 112 for fastening to the housing 82 of the power transmission unit 80 with a fastening bolt (not shown). The plurality of Ts 112a are formed at regular intervals on the outside circumference of the core 112, and the plurality of fastening portions 112b are formed at regular intervals on an inside circumference of the core 112, and each of the fasting portions 112b has a fastening hole 112c for fastening with a fastening bolt.

Of the plurality of Ts 112a, the coil 114 is wound two of the Ts 112a, such that a plurality of coils 114 are wound along an outside circumference of the core 112, and are bound along circumferences of the upper surface and the lower surface of the core 112.

The rotor 120 includes a rotor frame 122 mounted to surround an outside circumferential surface and an underside surface of the stator 110, a rotor core 124 mounted on an inside circumferential surface of the rotor frame 122 so as to be rotatable by electro-magnetic force acting with respect to the stator 110, and a rotor bushing 44 at a center of a lower surface of the rotor frame 122, for fastening a lower end of the rotating shaft 130 thereto.

The rotor frame 122 of a cylindrical shape with an opened top in overall includes a rotor core securing portion 122a on an inside surface for seating, and securing the rotor core 124, and a bushing securing portion 122b at a center of the lower surface having first fastening holes 160a for securing the rotor bushing 126 thereto with fastening members 160.

In the meantime, the rotor frame 122 includes air holes and blades for preventing temperature rise of the motor 60 by introducing external air into the motor 60. That is, an internal temperature of the motor 60 rises due to electromagnetic heat loss of the motor 60 when the motor 60 is driven, cooling of the motor 60 is required so that performance of the motor 60 does not become poor.

At the lower surface of the rotor frame 122, there are lower air holes 140 and lower blades 142 for cooling a lower portion of the motor 60, and at a side surface of the rotor frame 122, there are side air holes 144 for improving the cooling performance of the lower air holes 140 and the lower blades 142.

The lower air holes 140 are arranged in a radial pattern in the lower surface of the rotor frame 122 around the bushing securing portion 122b between the side of the rotor frame 122 and the bushing securing portion 122b. Each of the lower blades 142 is projected upwardly from one side of each of the lower air holes 140 so that a flow rate of the external air through the lower air holes 140 increases.

In the patterns of the lower air holes 140 and the lower blades 142, there are a Radial Type in which the lower air holes 140 and the lower blades 142 are extended in a radial direction 'R' of the rotor frame 122, a Forward Type in which the lower air holes 140 and the lower blades 142 are extended in a direction tilted in a rotation direction 'S' of the rotor frame 122 with respect to a radial direction 'R' of the rotor frame 122, and a Backward Type in which the lower air holes 140 and the lower blades 142 are extended in a direction tilted in a direction opposite to the rotation direction 'S' of the rotor frame 122 with respect to the radial direction 'R' of the rotor frame 122. The pattern of the related art lower air holes 40b and lower blades 40c is the radial type.

In detail, referring to FIGS. 14, 15, 16, and table 1, though the lower air holes 140 and the lower blades 142 of the backward type have a radial direction speed Vr which becomes maximum relatively as the rotor frame 122 rotates, to increase air flow rate compared to the radial type, the lower air holes 140 and the lower blades 142 of the forward type have the radial direction speed Vr of the rotor frame 122 which becomes minimum relatively, with an air flow rate even lower than the radial type though a total speed Vt of the lower air holes 140 and the lower blades 142 is the highest.

In this instance, the air flow rate of the lower air holes 140 and the lower blades 142 used for cooling the motor 60 is dependent on the radial direction speed Vr.

Particularly, since an arithmetic average of the air flow rates of the backward type and the forward type is higher than the air flow rate of the radial type, it is preferable that the lower air holes 140 and the lower blades 142 are extended in a direction tilted by an angle 'A' with respect to the radial direction 'R' of the rotor frame 122. The air flow rates of the backward type and the forward type are averaged arithmetically because the rotor frame 122 rotates both in the clockwise and counterclockwise direction during washing.

**Table 1**

| Type | Air flow rate (kg/s) | Radial direction speed (Vr)(m/s) | Total speed (Vt)(m/s) |
|---|---|---|---|
| Backward type | 2.613 | 3.608 | 4.614 |
| Radial type | 1.961 | 2.703 | 4.565 |
| Forward type | 1.621 | 2.242 | 6.124 |

Particularly, though the air flow rate becomes the higher as the tilted angle 'A' of the lower air holes 140 and the lower blades 142 with respect to the radial direction of the rotor frame 122 become the greater, if the tilted angle 'A' exceeds a limit angle, the air flow rate is reduced on the contrary. Even though the limit tilted angle 'A' varies with design conditions and operation conditions of the motor 60, in the present invention, the limit angle 'A' is 30°.

Therefore, the lower air holes 140 and the lower blades 142 are formed tilted by a tilted angle 'A' of 30° in a direction opposite to the rotation direction 'S' of the rotor frame 122 at the time of spinning, so that the cooling performance of the motor 60 becomes the maximum at the time of spinning when the heat generation at the motor 60 becomes the maximum.

The side air holes 144 are formed between the lower surface of the rotor frame 122 and the rotor core securing portion 122a at regular intervals along the side of the rotor frame 122 for discharging air drawn by the lower air holes 140 and the lower blades 142.

Since the side air holes 144 are at positions higher than the lower surface of the rotor frame 122, an air flow path between the lower air holes 140 and the side air holes 144 is formed on an upper side of the lower surface of the rotor frame 122. According to this, an area the air drawn through the lower air holes 140 is in contact with the lower portion of the motor 60 increases, to improve the cooling performance of the motor 60.

In the meantime, the rotor frame 122 has beads 146 and notches 148 for preventing distortion or deformation into an oval shape by centrifugal force.

There are a plurality of the beads 146, each of which is upward, or downward depression, formed in the lower surface of the rotor frame 122 extended in the radial direction of the rotor frame 122 at regular intervals of angle in a circumferential direction of the rotor frame 122.

The bead 146 has one end formed closest to the side of the rotor frame 122, and the other end formed in the same circumference of the first fastening holes 160a within the bushing securing portion 122b so that the other end overlaps with the rotor bushing 126.

The notches 148 are arranged at regular intervals of angles in a circumferential direction of the rotor frame 122 in an outside of a corner formed by a lower surface edge and a side surface edge of the rotor frame 122.

The rotor core 124 includes an annular core portion 124a of a stack of a plurality of steel pieces, and a winding portion 124b on the core portion 124a for serving as a passage of an induction current. The winding portion 124b includes an upper end ring 150 and a lower end ring 151 at an upper end and a lower end of the core portion 124a, and lead lines 152 connected between the upper end ring 150 and the lower end ring 151.

The rotor core 124 is fixedly secured to the rotor core securing portion 122a of the rotor frame 122, for which the rotor core securing portion 122a has upper projections 154 and lower projections 155 for holding the rotor core 124 at an upper portion and a lower portion thereof.

The upper projections 154 are formed on an upper side of the rotor core 124 in a circumferential direction at regular intervals so that the rotor core 124 does not fall off toward the opened top side of the rotor frame 122 when the rotor 120 rotates. The upper projections 154 are formed at a fixed height of the rotor core securing portion 122a regardless of a size of the rotor core 124.

The lower projections 155 are formed on a lower side of the rotor core securing portion 122a in a circumferential direction at regular intervals so that the rotor core 124 is put, and supported thereon. The lower projections 155 are formed at heights varied with sizes of the rotor core 124. Accordingly, since a position of the lower projections 155 varies, various sizes of rotor cores 124 can be mounted on the rotor core securing portion 122a, selectively.

The upper projections 154 and the lower projections 155 are formed by pressing an outside circumference of the rotor frame 122 inwardly such that the upper projections 154 and the lower projections 155 are projected inwardly.

Of course, adhesive may be applied between the rotor core 124 and the rotor core securing portion 122a for firmer fastening of the rotor core 124 to the rotor core securing portion 122a.

The rotor core 124 has an inside diameter greater than an outside diameter of the stator 110 so that a fixed size of gap 'G' is formed between the rotor core 124 and the stator 110.

Though efficiency of the motor 60 becomes the higher as the gap 'G' is formed the smaller, the rotor 120 is liable to hit the stator 110 if the size of the gap 'G' is too small, design, fabrication, and maintenance of the motor is required so that there is always an optimal gap 'G' between the rotor core 124 and the stator 110.

Accordingly, the rotor frame 122 has gap verification holes 156 (see FIG. 12) in the lower surface as gap verifying means for noticing, and measuring the gap 'G'. There are a plurality of the gap verifying holes 156 along the gap 'G' between the stator 110 and the rotor core 124 in the lower surface of the rotor frame 122 at regular intervals.

In the meantime, there are a plurality of blades 158 formed projected upward from, and at regular intervals along a top circumference of the upper end ring 150 of the rotor core 124 for cooling the upper portion of the motor 60.

That is, though the lower portion of the motor 60 is cooled by the lower air holes 140 and the lower blades 142 of the rotor frame 122, since the air blown by the lower air holes 140 and the lower blades 142 does not reach to the upper portion of the motor 60, but is discharged through the side air holes 144, a cooling effect of the upper portion of the motor 60 by the lower air holes 140 and the lower blades 142 is very low. Consequently, the plurality of blades 158 blow external air to the upper portion of the motor 60 as the motor 60 is driven.

The blades 158 are extended in a radial direction 'R' of the rotor core 124.

The rotor bushing 126 includes a bushing portion 126a for securing a lower end of the rotating shaft 130, and a securing portion 126b around the bushing portion 126a for securing to the bushing securing portion 122b of the rotor frame 122.

The bushing portion 126a is formed of metal, for placing and securing one end of the rotating shaft 130 therein.

The securing portion 126b is a plastic injection molding for electric insulation between the bushing portion 126a and the rotor frame 122, and has second fastening holes 160b in correspondence to the first fastening holes 160a of the bushing securing portion 122b, for securing to the bushing securing portion 122b with fastening members 160.

The plurality of first fastening holes 160a and the plurality of second fastening holes 160b, respectively formed in the bushing securing portion 122b and the rotor bushing 126 in circumferential directions thereof in correspondence to each other, are fastened with bolts 162 and rivets 164 alternately in a circumferential direction.

The securing portion 126b has a second clutch gear 166 on an upper surface for engagement with the first clutch gear 104a of the clutch coupling 104.

The operation of the motor for a washing machine of the present invention will be described.

Upon application of AC power to the motor 60, a current flows to the coil 114 on the stator 110, to form a rotating magnetic field at the stator 110 and an induction current at the rotor core 124 of the rotor 120.

Owing to interaction between the rotating magnetic field and the induction current of the stator 110 and the rotor core 124, rotating force is generated to rotate the rotor 120, and rotation force of the rotor 120 is transmitted to the power transmission unit 80 through the rotating shaft 130.

In this instance, though the rotor core 124 tends to fall off the rotor core securing portion 122a of the rotor frame 122 upwardly, or downwardly by the rotation force of the rotor 120, since the upper projections 154 and the lower projections 154 of the rotor core securing portion 122a hold an upper end and a lower end of the rotor core 124, fall off of the rotor core 124 is prevented.

In the meantime, with regard to a mounting method of the rotor core 124, the rotor frame 122 has an outward bending in the middle of the side of the rotor frame 122, and an upward bending therefrom again, to form a seating portion 153 at an inside of the middle of the rotor frame 122 along a circumference direction.

Referring to FIG. 9, the plurality of lower projections 155 are formed at a lower portion of the rotor core securing portion 122a above the seating portion 153 in the circumferential direction at an appropriate height from the lower surface of the rotor frame 122 depending on a size of the rotor core 124.

Referring to FIG. 10, the rotor core 124 is put down from an upper side of the rotor frame 122 until the rotor core 124 is placed in the rotor core securing portion 122a fully, when the plurality of lower projections 155 support a lower end of the core.

In this instance, adhesive may be applied to a contact surface between the rotor core 124 and the rotor frame 122, additionally.

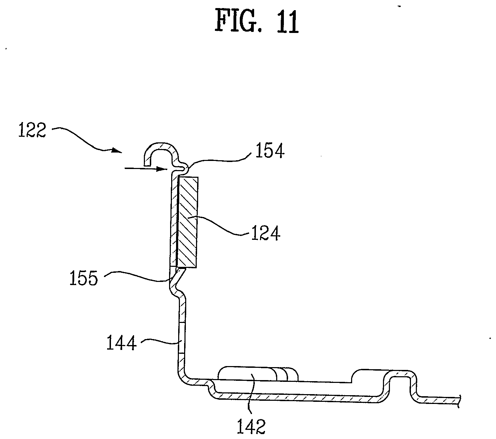

Referring to FIG. 11, once the lower end of the rotor core 124 is placed, and supported on the plurality of lower projections 155, the plurality of upper projections 154 are formed at the upper portion of the rotor core securing portion 122a, for pressing down, and holding an upward movement of the rotor core 124.

The upper projections 154 are also formed along the circumferential direction. The plurality of upper projections 154 and the lower projections 155 are formed to be projected inwardly by punching the side of the rotor frame 122 from an outside to an inside with a pointed tool, or by lancing.

In the meantime, when the rotor 120 rotates by the interaction of the rotating magnetic field and the induction current, external air is drawn by the blades 158 at the top of the rotor core 124, and blown to upper portions of the stator 110 and the rotor core 124, to cool the upper portion of the motor 60.

Moreover, as the rotor 120 rotates, external air is drawn by the lower air holes 140 and the lower blades 142 of the rotor frame 122, blown toward lower portions of the stator 110 and the rotor core 124, to cool the lower portion of the motor 60, and discharged to an outside of the motor 60 through the side air holes 144.

Since the lower air holes 140 and the lower blades 142 are formed tilted in a range of 30° in a direction opposite to a rotation direction 'S' of the rotor in spinning of the washing machine, a flow rate of the lower air holes 140 and the lower blades 142 become maximum when the rotor frame 122 rotates in the spin direction 'S', such that the cooling performance of the motor 60 becomes the maximum at the time of spinning when the heat generation of the motor 60 also becomes the maximum.

Since the side air holes 144 are positioned higher than the lower surface of the rotor frame 122, when compared to the related art air flow path in which the air is discharged after introduced through the lower air holes 140, an air flow path between the lower air holes 140 and the side air holes 144 is moved up toward the stator 110 and the rotor core 124, to increase a contact area between the motor 60 and the external air.

Accordingly, as the upper portion and the lower portion of the motor 60 are cooled by the external air at the same time, and the cooling area of the lower portion of the motor 60 by the external air also increases, the cooling performance of the motor 60 increases.

In the meantime, the distortion or deformation into an ellipse of the rotor frame 122 by a high centrifugal force coming from spinning of the rotor 120 makes the rotor frame 122 to throb.

However, the plurality of beads 146 and the notches 148 reinforce the rotor frame 122 to prevent deformation of the rotor frame 122 even if thickness of the rotor frame 122 becomes thinner.

Particularly, even though a major portion of the force applied to the rotor frame 122 acts on the bushing securing portion 122b which is stepped, and has the plurality of fastening holes 160a, and 160b, and the rotating shaft 130 placed therein, the beads 146, extended from the side of the rotor frame 122 to a position where the first fastening holes 160a of the bushing securing portion 122b are, prevents deformation of the rotor frame 122 at the bushing securing portion 122b.

In the meantime, if a size of the gap 'G' between the stator 110 and the rotor 120 varies with positions, leading to vary distribution of interactive force between the stator 110 and the rotor core 124 with the positions of the gap 'G' and the rotor 120 and the stator 110 to collide with each other, the manufacturer or the service man can maintain, or adjust the gap 'G' of the motor 60 constant through the plurality of gap verifying holes 156 in the rotor frame 122.

That is, by verifying the gap 'G' through each of the plurality of gap verifying holes 156, the size of the gap 'G' is inspected, to detect defect of the gap 'G', and adjustment of the gap 'G' becomes easier.

## Claims

1. A motor for a washing machine comprising:
a stator (110) having an AC power applied thereto;
a rotor core (124) on an outer side of the stator mounted so as to be rotatable by interaction of electromagnetic force with respect to the stator;
a rotor frame (122) arranged to surround the outer side of the stator;
rotor core securing means formed along a side of the rotor frame for seating, and securing the rotor core, and preventing the rotor core from moving in up/down directions, and
strength reinforcing means for improving strength of the rotor frame,
wherein the strength reinforcing means are notches (148) at a corner which connects a lower surface and a side surface of the rotor frame (122), and
wherein the rotor core securing means includes;
a rotor core securing portion (122a) for seating the rotor core on an inside surface of the rotor frame, and
lower projections (155) projected inwardly from a lower portion of the rotor core securing portion for supporting a lower end of the rotor core, **characterized by**
upper projections (154) projected inwardly from an upper portion of the rotor core securing portion (122a) for holding an upper end of the rotor core (124),
wherein the lower, and upper projections (154, 155) are formed as the side of the rotor frame (122) is punched inwardly from an outside to an inside.

2. The motor as claimed in claim 1, wherein a plurality of the lower, and upper projections (154, 155) are formed at regular intervals in a circumferential direction of the frame.

3. The motor as claimed in claim 1, wherein the lower projections (155) have height direction projection positions of the seating portion, each varied with a height of the rotor core.

4. The motor as claimed in claim 1, wherein the rotor core (124) is bonded to the seating portion with adhesive.

5. The motor as claimed in claim 1, wherein the notches (148) are formed by punching a portion of the corner of the rotor frame from (122) an outside to an inside.

6. The motor as claimed in claim 1, wherein the notches (148) are formed along the corner of the rotor frame (122) at regular intervals in a plural number.

7. The motor as claimed in claim 1, wherein the strength reinforcing means are beads (146) arranged in a radial pattern on the lower surface of the rotor frame (122), each extended in a radial direction.

8. The motor as claimed in claim 7, wherein the rotor frame (122) includes a bushing securing portion (122a) at the lower surface of the rotor frame (122) for mounting the rotor bushing (126) thereon, and
each of the beads has one end extended toward an inside of the bushing securing portion.

9. The motor as claimed in claim 8, wherein the bushing securing portion (122b) is formed at a center of the lower surface of the rotor frame (122) stepped in a vertical direction.

10. The motor as claimed in claim 8, wherein the beads (146) are projected to a direction opposite to a direction of mounting of the rotor bushing (126) so that the rotor bushing (126) can be in close contact with the bushing securing portion (122b).

11. The motor as claimed in claim 8, wherein the rotor bushing (126) and the bushing securing portion (122b) have a plurality of fastening holes (160a, 160b) in a circumferential direction for fastening members (160), and
the beads (146) are extended between the plurality of fastening holes respectively, such that one ends thereof are positioned on the same circumference with the plurality of fastening holes.

12. The motor as claimed in claim 1, further comprising gap verifying means for verifying a gap between the rotor core and the stator.

13. The motor as claimed in claim 12, wherein the gap verifying means are gap verifying holes (156) in the lower surface of the rotor frame (122) arranged under the gap.

14. The motor as claimed in claim 13, wherein a plurality of the gap verifying holes (156) are arranged in the lower surface of the rotor frame (122) in a circumferential direction.

15. The motor as claimed in claim 1, wherein the rotor frame (122) has a plurality of air holes (140) in the lower surface formed in a radial pattern, each tilted by an angle with respect to a radial direction of the rotor frame.

16. The motor as claimed in claim 15, further comprising a vertical blade (142) projected from an edge of each of the air holes.

17. The motor as claimed in claim 16, wherein each of the air holes (140) and the blades (142) are tilted by an angle in a direction opposite to a rotation direction of the rotor frame in spinning of the washing machine.

18. The motor as claimed in claim 17, wherein the tilting angle is 30°

19. The motor as claimed in claim 16, further comprising a rotor bushing (126) at a center of the lower surface of the rotor frame, the rotor busing (126) connected to one end of a rotating shaft, and
the air holes (140) and the blades (142) are formed between the side of the rotor frame (122) and the rotor bushing (126).

20. The motor as claimed in claim 1, wherein the rotor core has a plurality of blades (142) projected upward from and disposed along a top thereof at regular intervals.

21. The motor as claimed in claim 20, wherein the rotor core (142) includes;
an annular core portion (124a) of a stack of a plurality of steel pieces,
an upper end ring (150) and a lower end ring (151) at an upper end and a lower end of the core portion, and
lead lines (152) connected between the upper end ring and the lower end ring,
wherein the plurality of blades (142) are formed as one body with, and projected from an upper surface of the upper end ring.

22. The motor as claimed in claim 20, wherein the plurality of blades (142) are extended in a radial direction of the rotor frame (122).

23. The motor as claimed in claim 21, wherein the plurality of blades (142) are extended tilted by an angle with respect to the radial direction of the rotor frame (122).

24. The motor as claimed in claim 23, wherein the tilted angle of the blade is 30°

25. The motor as claimed in claim 1, wherein the rotor frame (122) has blades (142) provided to a top there.

26. The motor as claimed in claim 25, wherein a plurality of the blades (142) are formed projected upward from, and along the top of the rotor frame (122) at regular intervals.

27. The motor as claimed in claim 26, wherein the plurality of blades (142) are extended in a radial direction of the rotor frame (122).

28. The motor as claimed in claim 26, wherein the plurality of blades (142) are extended tilted by an angle with respect to the radial direction of the rotor frame (122).

29. The motor as claimed in claim 28, wherein the tilted angle of the blade is 30°

30. The motor as claimed in claim 25, wherein the rotor frame (122) has a top portion bent outwardly, and the blade is formed by vertical bending of the outwardly bent top portion of the rotor frame after a portion thereof is cut.

## Patentansprüche

1. Motor für eine Waschmaschine, der aufweist:
einen Stator (110), an den eine Wechselspannungsleistung angelegt wird;
einen Rotorkern (124) auf einer Außenseite des Stators, der derart montiert ist, dass er durch die Wechselwirkung einer elektromagnetischen Kraft in Bezug auf den Stator drehbar ist;
einen Rotorrahmen (122), der eingerichtet ist, um die Außenseite des Stators zu umgeben;
eine Rotorkernbefestigungseinrichtung, die entlang einer Seite des Rotorrahmens ausgebildet ist, um den Rotorkern aufzulagern und zu befestigen und zu verhindern, dass der Rotorkern sich in Oben-/Untenrichtungen bewegt, und
Festigkeitsverstärkungseinrichtungen, um die Festigkeit des Rotorrahmens zu verbessern,
wobei die Festigkeitsverstärkungseinrichtungen Kerben (148) an einer Ecke sind, die eine untere Oberfläche und eine Seitenoberfläche des Rotorrahmens (122) verbindet, und
wobei die Rotorkernbefestigungseinrichtung umfasst:
einen Rotorkernbefestigungsabschnitt (122a) zum Auflagern des Rotorkerns auf einer Innenoberfläche des Rotorrahmens, und
untere Vorsprünge (155), die von einem unteren Abschnitt des Rotorkernbefestigungsabschnitts einwärts vorstehen, um ein unteres Ende des Rotorkerns zu halten, **gekennzeichnet durch**
obere Vorsprünge (154), die von einem oberen Abschnitt des Rotorkernbefestigungsabschnitts (122a) einwärts vorstehen, um ein oberes Ende des Rotorkerns (124) zu halten,
wobei die unteren und oberen Vorsprünge (154, 155) ausgebildet werden, während die Seite des Rotorrahmens (122) von außen nach innen gestanzt wird.

2. Motor nach Anspruch 1, wobei mehrere der unteren und oberen Vorsprünge (154, 155) in regelmäßigen Abständen in einer Umfangsrichtung des Rahmens ausgebildet sind.

3. Motor nach Anspruch 1, wobei die unteren Vorsprünge (155) Höhenrichtungsvorsprungpositionen des Auflagerabschnitts haben, die jeweils mit einer Höhe des Rotorkerns verändert werden.

4. Motor nach Anspruch 1, wobei der Rotorkern (124) durch Klebstoff mit dem Auflagerabschnitt verbunden ist.

5. Motor nach Anspruch 1, wobei die Kerben (148) durch Stanzen eines Abschnitts des Ecks des Rotorrahmens (122) von außen nach innen ausgebildet sind.

6. Motor nach Anspruch 1, wobei die Kerben (148) in regelmäßigen Abständen mehrfach entlang der Ecke des Rotorrahmens (122) ausgebildet sind.

7. Motor nach Anspruch 1, wobei die Festigkeitserhöhungseinrichtungen Verstärkungsrippen (146) sind, die in einem radialen Muster auf der unteren Oberfläche des Rotorrahmens (122) angeordnet sind, die sich jeweils in einer Radialrichtung erstrecken.

8. Motor nach Anspruch 7, wobei der Motorrahmen (122) einen Buchsenbefestigungsabschnitt (122a) an der unteren Oberfläche des Rotorrahmens (122) aufweist, um die Rotorbuchse (126) darauf zu montieren, und
jede der Verstärkungsrippen ein Ende hat, das in Richtung eines Inneren des Buchsenbefestigungsabschnitts verlängert ist.

9. Motor nach Anspruch 8, wobei der Buchsenbefestigungsabschnitt (122b) in einer Mitte der unteren Oberfläche des Rotorrahmens (122) ausgebildet ist, der in einer Vertikalrichtung gestuft ist.

10. Motor nach Anspruch 8, wobei die Verstärkungsrippen (146) in eine Richtung entgegengesetzt zu einer Montagerichtung der Rotorbuchse (126) vorstehen, so dass die Rotorbuchse (126) in engem Kontakt mit dem Buchsenbefestigungsabschnitt (122b) sein kann.

11. Motor nach Anspruch 8, wobei die Rotorbuchse (126) und der Buchsenbefestigungsabschnitt (122b) mehrere Befestigungslöcher (160a, 160b) in einer Umfangsrichtung für Befestigungselemente (160) haben, und
die Verstärkungsrippen (146) jeweils sich zwischen den mehreren Befestigungslöchern erstrecken, so dass ihre einen Enden auf dem gleichen Umfang wie die mehreren Befestigungslöcher positioniert sind.

12. Motor nach Anspruch 1, der ferner Lückenprüfeinrichtungen zum Prüfen einer Lücke zwischen dem Rotorkern und dem Stator aufweist.

13. Motor nach Anspruch 12, wobei die Lückenprüfeinrichtungen Lückenprüflöcher (156) in der unteren Oberfläche des Rotorrahmens (122) sind, die unter der Lücke angeordnet sind.

14. Motor nach Anspruch 13, wobei mehrere der Lückenprüflöcher (156) in einer Umfangsrichtung in der unteren Oberfläche des Rotorrahmens (122) angeordnet sind.

15. Motor nach Anspruch 1, wobei der Rotorrahmen (122) mehrere Luftlöcher (140) in der unteren Oberfläche hat, die in einem radialen Muster ausgebildet sind, wobei jedes in einem Winkel in Bezug auf eine Radialrichtung des Rotorrahmens geneigt ist.

16. Motor nach Anspruch 15, der ferner ein vertikales Blatt (142) aufweist, das von einem Rand jedes der Luftlöcher vorsteht.

17. Motor nach Anspruch 16, wobei jedes der Luftlöcher (140) und der Blätter (142) beim Schleudern der Waschmaschine um einen Winkel in eine Richtung entgegengesetzt zu einer Drehrichtung des Rotorrahmens geneigt sind.

18. Motor nach Anspruch 17, wobei der Neigungswinkel 30° ist.

19. Motor nach Anspruch 16, der ferner eine Rotorbuchse (126) in einer Mitte der unteren Oberfläche des Rotorrahmens aufweist, wobei die Rotorbuchse (126) mit einem Ende einer Drehwelle verbunden ist, und
die Luftlöcher (140) und die Blätter (142) zwischen der Seite des Rotorrahmens (122) und der Rotorbuchse (126) ausgebildet sind.

20. Motor nach Anspruch 1, wobei der Rotorkern mehrere Blätter (142) hat, die aufwärts vorstehen und in regelmäßigen Abständen entlang seiner Oberseite angeordnet sind.

21. Motor nach Anspruch 20, wobei der Rotorkern (142) aufweist:
einen ringförmigen Kernabschnitt (124a) eines Stapels aus mehreren Stahlstücken,
einen oberen Endring (150) und einen unteren Endring (151) an einem oberen Ende und einem unteren Ende des Kernabschnitts, und
Zuführungsleitungen (152), die zwischen dem oberen Endring und dem unteren Endring verbunden sind,
wobei die mehreren Blätter (142) als ein Körper mit einer oberen Oberfläche des oberen Endrings ausgebildet sind und von dieser vorstehen.

22. Motor nach Anspruch 20, wobei die mehreren Blätter (142) sich in einer Radialrichtung des Rotorrahmens (122) erstrecken.

23. Motor nach Anspruch 21, wobei die mehreren Blätter (142) sich um einen Winkel in Bezug auf die Radialrichtung des Rotorrahmens (122) geneigt erstrecken.

24. Motor nach Anspruch 23, wobei der Neigungswinkel des Blatts 30° ist.

25. Motor nach Anspruch 1, wobei der Rotorrahmen (122) Blätter (142) hat, die dort an einer Oberseite bereitgestellt sind.

26. Motor nach Anspruch 25, wobei mehrere der Blätter (142) in regelmäßigen Abständen entlang der Oberseite des Rotorrahmens (122) von dieser nach oben vorstehend ausgebildet sind.

27. Motor nach Anspruch 26, wobei die mehreren Blätter (142) sich in einer Radialrichtung des Rotorrahmens (122) erstrecken.

28. Motor nach Anspruch 26, wobei die mehreren Blätter (142) sich um einen Winkel in Bezug auf die Radialrichtung des Rotorrahmens (122) geneigt erstrecken.

29. Motor nach Anspruch 28, wobei der Neigungswinkel des Blatts 30° ist.

30. Motor nach Anspruch 25, wobei der Rotorrahmen (122) einen oberen Abschnitt hat, der nach außen gekrümmt ist, und das Blatt durch vertikales Biegen des nach außen gekrümmten oberen Abschnitts des Rotorrahmens, nachdem ein Abschnitt davon abgeschnitten wurde, ausgebildet ist.

## Revendications

1. Moteur pour machine à laver comprenant :
un stator (110) alimenté par CA (courant alternatif) ;
un noyau de rotor (124) sur un côté externe du stator monté en rotation par interaction de force électromagnétique par rapport au stator ;
un bâti de rotor (122) agencé de façon à entourer le côté externe du stator ;
des moyens de fixation de noyau de rotor formés le long d'un côté du bâti de rotor pour assurer le siège et la fixation du noyau de rotor, et pour empêcher le noyau de rotor de monter et descendre, et
des moyens de renforcement de résistance destinés à augmenter la résistance du bâti de rotor,
dans lequel les moyens de renforcement de résistance sont des crans (148) sur un coin reliant une surface inférieure à une surface latérale du bâti de rotor (122), et
dans lequel les moyens de fixation de noyau de rotor comportent :
une partie de fixation de noyau de rotor (122a) destinée à assurer le siège du noyau de rotor sur une partie intérieure du bâti de rotor, et
des saillies inférieures (155) faisant saillie vers l'intérieur depuis une partie inférieure de la partie de fixation de noyau de rotor pour soutenir une extrémité inférieure du noyau de rotor, **caractérisé en ce que**
des saillies supérieures (154) faisant saillie vers l'intérieur depuis une partie supérieure de la partie de fixation de noyau de rotor (122a) pour soutenir une extrémité supérieure du noyau de rotor (124),
dans lequel les saillies inférieures et supérieures (154, 155) sont formées de sorte que le côté du bâti de rotor (122) est renfoncé vers l'intérieur depuis l'extérieur.

2. Moteur selon la revendication 1, dans lequel plusieurs des saillies inférieures et supérieures (154, 155) sont formées à des intervalles réguliers dans une direction circonférentielle du bâti.

3. Moteur selon la revendication 1, dans lequel les saillies inférieures (155) possèdent des positions de saillie vers le haut de la partie formant siège, variant chacune avec la hauteur du noyau de rotor.

4. Moteur selon la revendication 1, dans lequel le noyau de rotor (124) est lié à la partie formant siège par un adhésif.

5. Moteur selon la revendication 1, dans lequel les crans (148) sont formés en renfonçant une partie du coin du bâti de rotor (122) de l'extérieur vers l'intérieur.

6. Moteur selon la revendication 1, dans lequel les crans (148) sont formés le long du coin du bâti de rotor (122) à des intervalles réguliers de façon plurielle.

7. Moteur selon la revendication 1, dans lequel les moyens de renforcement de résistance sont des nervures (146) agencées radialement sur la surface inférieure du bâti de rotor (122), s'étendant chacune en direction radiale.

8. Moteur selon la revendication 7, dans lequel le bâti de rotor (122) comporte une partie de fixation de douille (122a) sur la surface inférieure du bâti de rotor (122) pour monter la douille de rotor sur celui-ci, et
chacune des nervures possède une extrémité s'étendant vers l'intérieur de la partie de fixation de douille.

9. Moteur selon la revendication 8, dans lequel la partie de fixation de douille (122b) est formée au centre de la surface inférieure du bâti de rotor (122) échelonnée verticalement.

10. Moteur selon la revendication 8, dans lequel les nervures (146) font saillie en direction opposée à la direction de montage de la douille de rotor (126) de sorte que la douille de rotor (126) puisse être en contact étroit avec la partie de fixation de douille (122b).

11. Moteur selon la revendication 8, dans lequel la douille de rotor (126) et la partie de fixation de douille (122b) possèdent plusieurs trous d'attache (160a, 160b) en direction circonférentielle pour des organes d'attache (160), et
les nervures (146) s'étendent respectivement entre les plusieurs trous d'attache de telle sorte que les extrémités de ces dernières soient positionnées sur une même circonférence avec les plusieurs trous d'attache.

12. Moteur selon la revendication 1, comprenant en outre des moyens de vérification d'entrefer destiné à vérifier l'entrefer entre le noyau de rotor et le stator.

13. Moteur selon la revendication 12, dans lequel les moyens de vérification d'entrefer sont des trous de vérification d'entrefer (156) dans la surface inférieure du bâti de rotor (122) agencés sous l'entrefer.

14. Moteur selon la revendication 13, dans lequel plusieurs des trous de vérification d'entrefer (156) sont agencés dans la surface inférieure du bâti de rotor (122) en direction circonférentielle.

15. Moteur selon la revendication 1, dans lequel le bâti de rotor (122) possède plusieurs trous d'aération (140) dans la surface inférieure formés radialement, étant chacun incliné à un angle par rapport à la direction radiale du bâti de rotor.

16. Moteur selon la revendication 15, comprenant en outre une lame verticale (142) faisant saillie à partir d'un bord de chacun des trous d'aération.

17. Moteur selon la revendication 16, dans lequel chacun des trous d'aération (140) et des lames (142) sont inclinés à un angle en direction opposée à la direction de rotation du bâti de rotor pendant l'essorage de la machine à laver.

18. Moteur selon la revendication 17, dans lequel l'angle d'inclinaison est de 30°.

19. Moteur selon la revendication 16, comprenant en outre une douille de rotor (126) au centre de la surface inférieure du bâti de rotor, la douille de rotor (126) étant reliée à une extrémité d'un arbre en rotation, et
les trous d'aération (140) et les lames (142) sont formés entre le côté du bâti de rotor (122) et la douille de rotor (126).

20. Moteur selon la revendication 1, dans lequel le noyau de rotor possède plusieurs lames (142) faisant saillie vers le haut et disposées le long du dessus de celui-ci à des intervalles réguliers.

21. Moteur selon la revendication 20, dans lequel le noyau de rotor (142) comporte :
une partie de noyau annulaire (124a) d'un empilement de plusieurs pièces en acier,
un anneau d'extrémité supérieure (150) et un anneau d'extrémité inférieure (151) sur une extrémité supérieure et sur une extrémité inférieure de la partie de noyau, et
des lignes de guidage (152) reliées entre l'anneau d'extrémité supérieure et l'anneau d'extrémité inférieure,
dans lequel les plusieurs lames (142) sont formées en une seule pièce avec la surface supérieure de l'anneau d'extrémité supérieure et font saillie sur celle-ci.

22. Moteur selon la revendication 20, dans lequel les plusieurs lames (142) s'étendent en direction radiale du bâti de rotor (122).

23. Moteur selon la revendication 21, dans lequel les plusieurs lames (142) s'étendent de manière inclinée à un angle par rapport à la direction radiale du bâti de rotor (122).

24. Moteur selon la revendication 23, dans lequel l'angle d'inclinaison de la lame est de 30°.

25. Moteur selon la revendication 1, dans lequel le bâti de rotor (122) possède des lames (142) fournies au-dessus de celui-ci.

26. Moteur selon la revendication 25, dans lequel plusieurs des lames (142) sont formées en saillie vers le haut le long du dessus du bâti de rotor (122) à des intervalles réguliers.

27. Moteur selon la revendication 26, dans lequel les plusieurs lames (142) s'étendent en direction radiale du bâti de rotor (122).

28. Moteur selon la revendication 26, dans lequel les plusieurs lames (142) s'étendent de manière inclinée à un angle par rapport à la direction radiale du bâti de rotor (122).

29. Moteur selon la revendication 28, dans lequel l'angle d'inclinaison de la lame est de 30°.

30. Moteur selon a revendication 25, dans lequel le bâti de rotor (122) possède une partie du haut pliée vers l'extérieur, et la lame est formée par pliage vertical de la partie du haut pliée vers l'extérieur du bâti de rotor après qu'une partie de ce dernier soit découpée.
